# EUROPÄISCHE PATENTANMELDUNG

(11) **EP 1 921 730 A2**
(43) Veröffentlichungstag der Anmeldung: **14.05.2008**
(21) Anmeldenummer: 07013575.1
(22) Anmeldetag: 11.07.2007
(51) Int. Cl.: H02K 3/28

(54) **Verfahren zur Herstellung einer Transversalflussmaschine**

(30) Priorität: 09.11.2006 DE 102006052766
(71) Anmelder: ROBERT BOSCH GMBH, 70469 Stuttgart (DE)
(72) Erfinder: Gröning, Ingolf, Dr., 97816 Lohr am Rhein (DE); Kaehler, Christian, Dr., 52146 Würselen (DE)
(74) Vertreter: Thürer, Andreas

(57) **Zusammenfassung**

Ein Verfahren zur Herstellung einer Transversalflussmaschine wobei in einem Schritt eine Spule (3, 13, 23, 33) auf einen Spulenträger (4, 14, 24, 34) gewickelt wird. In einem weiteren Schritt wird die Spule (3, 13, 23, 33) isoliert und die Spule (3, 13, 23, 33) in ein Rückschlussjoch (5, 15, 25, 35) eingebracht. Erfindungsgemäß sind das Rückschlussjoch und der Spulenträger (4, 14, 24, 34) getrennte Bauteile und die Spule (3, 13, 23, 33) erhält nach dem Wickeln auf dem Spulenträger (4, 14, 24, 34) ihre endgültige Form.

## Beschreibung

Die vorliegende Erfindung bezieht sich auch ein Verfahren zur Herstellung einer Transversalflussmaschine. Transversalflussmaschinen weisen im Gegensatz zu herkömmlichen Elektromotoren eine Vielzahl von Spulen auf, die in Form von Umfangswicklungen um den Rotor angeordnet sind. Dabei sind diese Spulen üblicherweise in ein Rückschlussjoch eingepresst, welches den Rotor umgibt. Die Herstellung dieser Transversalflussmaschinen ist sehr aufwändig und zeitintensiv. Der vorliegenden Erfindung liegt daher die Aufgabe zugrunde, die Fertigung einer Transversalflussmaschine und insbesondere deren Spulenfertigung zu vereinfachen. Damit ist die Erfindung auch auf eine Transversalflussmaschine bzw. eine unter fertigungstechnischen Gesichtspunkten optimierte bzw. verbesserte Transversalflussmaschine gerichtet.

Genauer soll das Einbringen der Spule in die Transversalflussmaschine unter fertigungstechnischen Gesichtspunkten verbessert und gleichzeitig eine günstige thermische Ankopplung, eine hohe Spannungsfestigkeit und eine hohe Isolationsklasse erreicht werden.

Die erfindungsgemäßen Verfahren sollen dabei sowohl für herkömmliche kreisförmige Spulen, die bei handelsüblichen Transversalflussmaschinen eingesetzt werden als auch für mäanderförmige Spulen oder in anderer Weise von der Kreisform abweichende Spulen geeignet sein.

Diese Aufgaben werden erfindungsgemäß durch ein Verfahren nach Anspruch 1 und durch einen Spulenträger nach Anspruch 13 erreicht. Vorteilhafte Ausführungsformen und Weiterbildungen sind Gegenstand der Unteransprüche.

Bei dem erfindungsgemäßen Verfahren wird wenigstens eine Spule auf einen Spulenträger gewickelt, in einem weiteren Verfahrensschritt die Spule isoliert und schließlich die Spule in ein Rückschlussjoch eingebracht. Dabei sind erfindungsgemäß das Rückschlussjoch und der Spulenträger getrennte Bauteile und die Spule erhält nach dem Wickeln auf dem Spuleriträger seine endgültige Form. Dabei werden bei der Betrachtung der endgültigen Form eventuelle geringe Verformungen durch folgende Einpressvorgänge außer acht gelassen.

Der Spulenträger kann abschließend in die Transversalflussmaschine ganz oder teilweise mit eingebaut oder auch nach dem Wicklungsvorgang wieder entnommen werden und bevorzugt wiederholt verwendet werden. Durch das Einbauen des Spulenträgers in die Transversalflussmaschine kann eine verbesserte Formgebung für die Spule erreicht werden. Auch kann der Spulenträger zur Isolation der Spule benutzt werden.

Durch das Wickeln der Spule auf den Spulenträger kann die Spule bereits in ihre endgültige Form gebracht werden und in dieser endgültigen Form in das Rückschlussjoch eingebracht bzw. eingepresst werden.

Vorzugsweise wird zur Herstellung der Spule ein Spulendraht mit im wesentlichen rechteckigen Querschnitt verwendet. Durch die Verwendung von (annähernd) rechteckigen Lackdrähten können der Kupferfüllfaktor und thermische Abkopplung weiter verbessert werden. Dies ist insbesondere aufgrund der Spulengeomtrie vorteilhaft, da im Gegensatz zu herkömmlichen Maschinen relativ geringe Biegeradien erforderlich sind. Damit wird die Isolierung des Lackdrahtes auch bei Verwendung rechteckiger Querschnitte des Drahtes nur in sehr geringer Weise belastet.

Bevorzugt wird die Spule mäanderförmig auf den Spulenträger gewickelt. Dies bedeutet, dass die Spule nicht in herkömmlicher Weise gleichmäßig aufgewickelt wird.

Vorteilhaft wird die Spule nach dem Wickeln verpresst. Auf diese Weise kann eine weitere Steigerung des Kupferfüllfaktors erreicht werden. Genauer wird die Spule, unabhängig davon, ob runder oder eckiger Lackdraht verwendet wird, nach dem Wickeln verpresst, um auf diese Weise einen höheren Kupferfüllfaktor zu erreichen. Insbesondere erfolgt das Pressen dabei derart, dass die Isolierung des Lackdrahts nicht beschädigt wird.

Vorteilhaft wird die Spule nach dem Wickeln verharzt. Durch das Verharzen der Spule nach dem Wickeln bzw. nach dem Einbringen in das Rückschlussjoch wird eine höhere Widerstandsfähigkeit gegen Spannungen und Spannungssteilheiten erreicht. Gleichzeitig wird dadurch eine verbesserte thermische Ankopplung und eine höhere mechanische Festigkeit erreicht, sodass die Leistung, die Schock- und Vibrationsfestigkeit sowie die Lebensdauer der Maschine gesteigert wird.

Bei einem weiteren vorteilhaften Verfahren wird die Spule nach dem Einbringen in das Rückschlussjoch mit diesem vergossen. Genauer gesagt wird besonders bevorzugt die Spule nach dem Einbringen in das Rückschlussjoch zusammen mit den Zähnen mit einer Vergussmasse vergossen, um auf diese Weise eine verbesserte thermische Ankopplung und somit eine höhere Leistung zu erreichen. Daneben können auch mögliche Schwingungen und Geräusche der Zähne gedämpft und das Verhalten der Transversalflussmaschine damit auch in akustischer Hinsicht verbessert werden. Daneben stellt die Vergussmasse auch einen mechanischen Schutz gegen Beschädigungen der Wicklung dar, was bei der Montage des Motors bzw. im Servicefall Vorteile bei der Handhabung ergibt.

Bei einem weiteren erfindungsgemäßen Verfahren verbleibt der Spulenträger nach dem Wickeln der Spule in der Transversalflussmaschine. Es ist jedoch auch möglich, den Spulenträger nach dem Wickeln der Spule bzw. nach dem Einpressen der Spule in das Rückschlussjoch wieder zu entfernen.

Im Einzelnen wird die Spule einer Phase einer Transversalflussmaschine auf einen bevorzugt externen Spulenkörper gewickelt. Dieser Spulenträger definiert die Form der Spule. Anschießend wird die Spule isoliert, was beispielsweise mit Isolierpapier folgen kann.

Bevorzugt wird die Spule im Anschluss entweder in das Rückschlussjoch eingepresst um auf dieses Weise einen guten thermischen Übergang zwischen der Spule und dem Rückschlussjoch zu erzeugen, jedoch andererseits die Spule nicht zu verletzen. Es ist jedoch auch möglich, dass Rückschlussjoch zu erwärmen und die Spule in das Rückschlussjoch einzuschrumpfen.

Bevorzugt werden nach dem Einbringen der Spule in das Rückschlussjoch die Zähne der Phase an der Spule angebracht. Genauer gesagt werden die Zähne der Phase von beiden Seiten angefügt. Es ist jedoch auch möglich, dass die Zähne einer Seite, die bereits eingesteckt sind, so dass die Spule in die Zusammenstellung aus Rückschlussjoch und Zähne der einen Seite eingebracht wird und im Anschluss lediglich die Zähne der zweiten Seite eingebracht werden. Dies wird unter Bezugnahme auf die Figuren im Detail erläutert.

Bevorzugt wird die Spule extern gewickelt.

Vorzugsweise wird ein Spulenträger aus einem temperaturfesten und bevorzugt auch isolierenden Material verwendet. Dies erlaubt in besonders vorteilhafter Weise ein Einschrumpfen der Spule in das Rückschlussjoch. Bevorzugt wird ein Spulenträger verwendet, der so ausgestaltet ist, dass er die Form der herzustellenden Wicklung (beispielsweise bei einer mäanderförmigen Wicklung) unterstützt.

Die vorliegende Erfindung ist weiterhin auf einen Spulenträger zur Herstellung einer Spule für eine Transversalflussmaschine gerichtet. Dieser Spulenträger weist einen Grundkörper mit kreisförmigem Querschnitt und eine Vielzahl von fest an dem Grundkörper angeordneten Vorsprüngen auf. Erfindungsgemäß sind die einzelnen Vorsprünge jeweils gleich zueinander in Umfangsrichtung des Grundkörpers beanstandet und ragen bezüglich des Grundkörpers wenigstens teilweise radial nach außen. Die herzustellende Spule wird insbesondere um die einzelnen Vorsprünge d. h. die Außenumfänge dieser Vorsprünge gewickelt. Dies bedeutet insbesondere, dass die Spule während des Wickelns auf den Spulenträger bevorzugt nicht mit dem gesamten Außenumfang des Spulenträgers und insbesondere nicht mit dem Grundkörper in Kontakt steht sondern lediglich mit den an dem Grundkörper angeordneten Vorsprüngen.

Vorzugsweise erstrecken sich die einzelnen Vorsprünge in einer senkrecht zu der Ebene des Grundkörpers stehenden Richtung (im Folgenden auch als Längsrichtung der Vorsprünge bezeichnet) wenigstens entlang der vollständigen Länge des Grundkörpers. Es ist jedoch auch möglich, dass die Vorsprünge in der senkrecht zu der Ebene des Grundkörpers stehenden Richtung länger sind als der Grundkörper selbst und damit auch die Spule in dieser Richtung länger ist als der Grundkörper selbst. Bei einer bevorzugten Ausführungsform ist der Grundköper als Ring ausgebildet. Besonders bevorzugt ist dabei dieser Grundkörper elastisch und in einer weiteren bevorzugten Ausführungsform temperaturbeständig und besonders bevorzugt auch isolierend ausgeführt.

Bei einer weiteren bevorzugten Ausführungsform sind die Vorsprünge an ihren radial außenliegenden Flächen gekrümmt. An diese Krümmung legt sich die Spule an, sodass durch diese Krümmung auch die endgültige Form der Spule bestimmt wird.

Vorzugsweise sind zwischen den Vorsprüngen entnehmbare Formstücke vorgesehen. Damit weist die Spule auch an den Stellen, an denen die Formstücke entnommen worden sind, eine höhere Rundförmigkeit auf und die Drahtbelastung beim Wickeln der Spule ist damit geringer.

Bei einer weiteren bevorzugten Ausführungsform weisen die Vorsprünge seitlich Borde auf. Dabei wird unter seitlich verstanden, dass die Borde seitlich bezüglich der auf der Ebene des Grundkörper senkrecht stehenden Richtung angeordnet sind. Besonders bevorzugt sind die seitlichen Borde der einzelnen Vorsprünge in der Umfangsrichtung des Spulenträgers abwechselnd an den gegenüberliegenden Enden der Vorsprünge angeordnet. Diese Anordnung eignet sich, wie insbesondere unter Bezugnahme auf die Figuren gezeigt wird, insbesondere für mäanderförmige Wicklungen.

Bei einer weiteren bevorzugten Ausführungsform weist der Spulenkörper eine Vielzahl von Ausnehmungen zur wenigstens teilweisen Aufnahme von Zähnen in der Transversalflussmaschine auf. Diese Ausführungsform eignet sich insbesondere, um den Spulenträger mit der darauf aufgewickelten Spule in die Transversalflussmaschine bzw. in das Rückschlussjoch einzufügen. Besonders bevorzugt verbleibt bei dieser Ausführungsform der Spulenträger in der Transversalflussmaschine.

### Weitere Vorteile und Ausführungsformen ergeben sich aus den beigefügten Zeichnungen:

Darin zeigen:

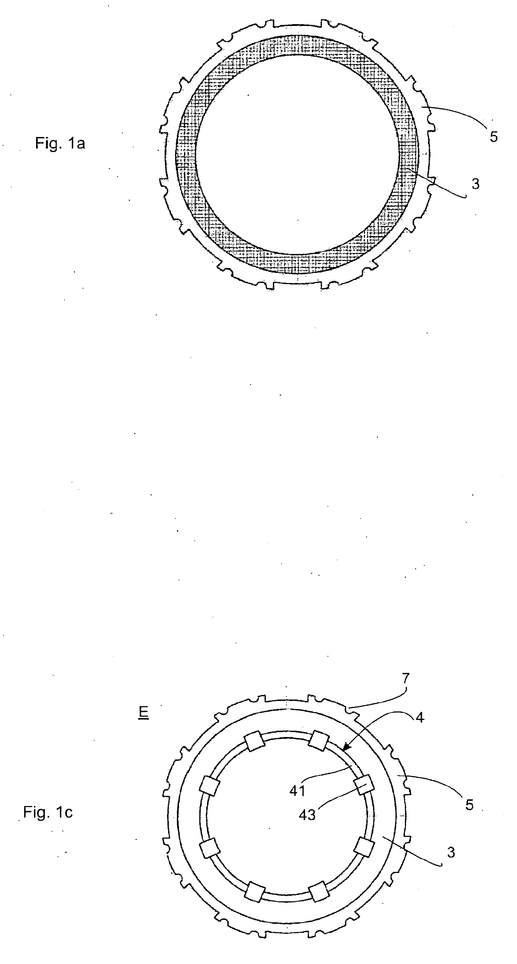

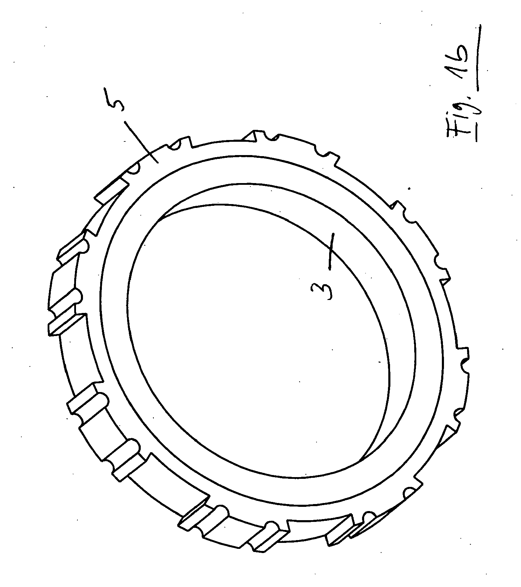

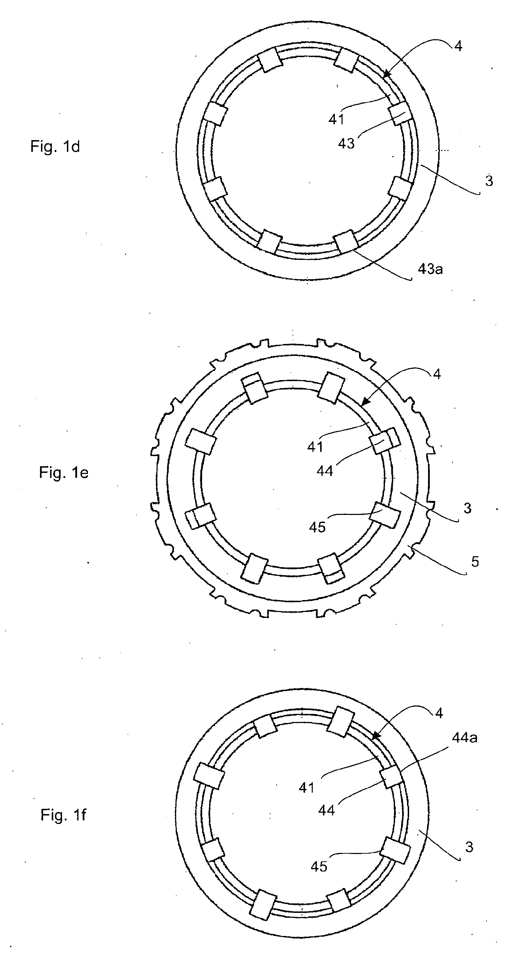

- Fig. 1a: eine schematische Darstellung einer in eine Transversalflussmaschine eingefügten Spule;

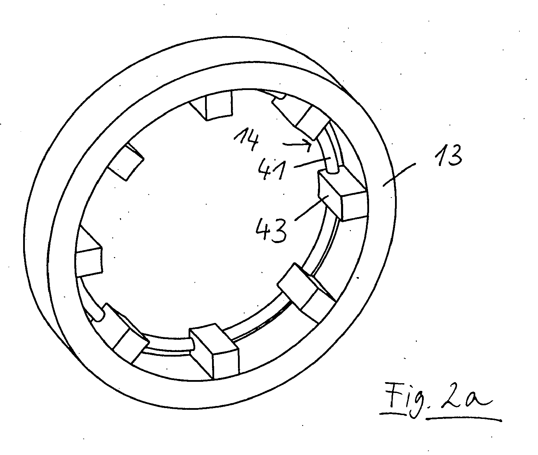

- Fig. 1 b: perspektivische schematische Darstellung der Spule aus Fig. 1a;
- Fig. 1 c: die Spule aus Fig. 1a mit einem Spulenträger;
- Fig. 1 d: einen Spulenträger mit der Spule aus Fig. 1a;
- Fig. 1e: einen Spulenträger mit einer Spule bei Verwendung einer mäanderförmgen Wicklung in einem Rückschlussjoch;
- Fig. 1f: einen Spulenträger mit der Spule bei aus Fig. 1e ohne Rückschlussjoch;
- Fig. 2a: eine dreidimensionale Darstellung eines Spulenträgers in einer weiteren Ausführungsform mit einer Spule;
- Fig. 2b: eine weitere perspektivische Darstellung eines Spulenträgers mit einer Spule für eine mäanderförmige Wicklung;
- Fig. 2c: einen Spulenträger mit einem Rückschlussjoch;
- Fig. 2d: einen Spulenträger mit einem Rückschlussjoch für eine mäanderförmige Wicklung;
- Fig. 3a: einen Spulenträger mit einer Spule und einem Rückschlussjoch in einer dritten Ausführungsform;
- Fig. 3b: einen Spulenträger mit einer Spule und Formstücken in der in Fig. 3a gezeigten Ausführungsform;
- Fig. 3c: eine perspektivische Darstellung der in Fig. 3a gezeigten Ausführungsform;
- Fig. 3d: eine perspektivische Darstellung der in Fig. 3b gezeigten Ausführungsform;
- Fig. 4a: einen Spulenträger mit einer Spule und einem Rückschlussjoch in einer vierten Ausführungsform;
- Fig. 4b: einen Spulenträger mit einer Spule ohne Rückschlussjoch;
- Fig. 4c: eine perspektivische Darstellung der Anordnung aus Fig. 4b;
- Fig. 4d: eine perspektivische Darstellung der Anordnung aus Fig. 4a;
- Fig. 5a: eine Draufsicht auf eine mäanderförmige Spule; und
- Fig. 5b: eine perspektivische Ansicht der Spule aus Fig. 5a.

Fig. 1 zeigt stark schematisch eine Spule 3, die in einem Rückschlussjoch 5 einer Transversalflussmaschine angeordnet ist. Durch das erfindungsgemäße Verfahren wird die Einbringung der Spule 3 in die Transversalflussmaschine vereinfacht. Die Transversalflussmaschine weist weiterhin ein (nicht gezeigtes) Gehäuse auf.

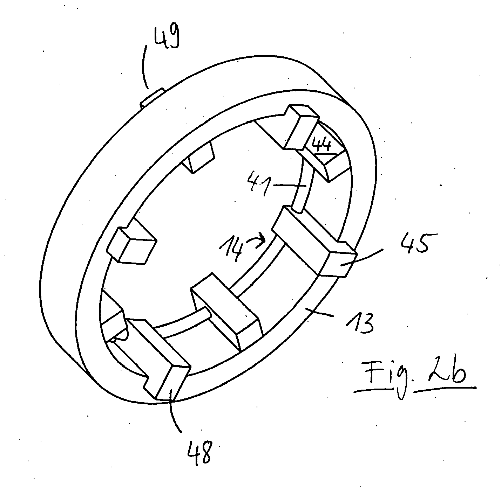

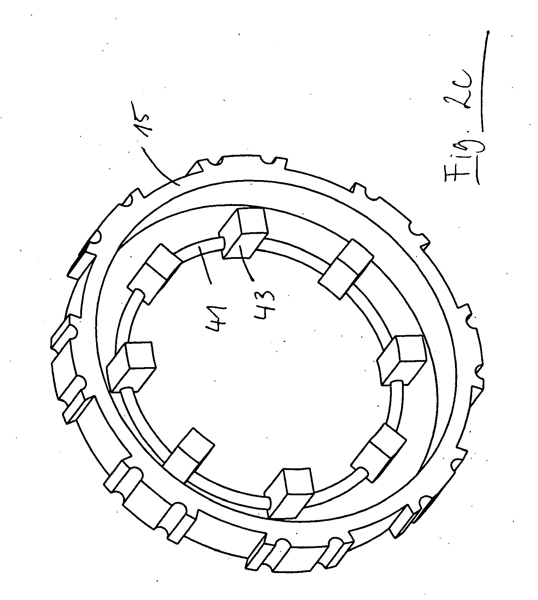

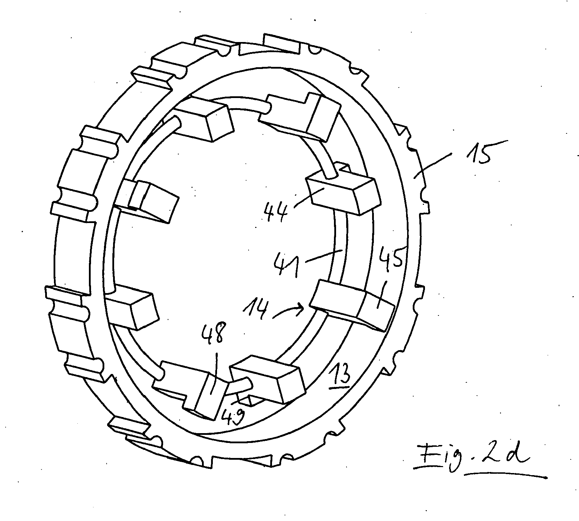

Fig. 2 zeigt eine perspektivische Darstellung der in Fig. 1 gezeigten schematischen Darstellung. Bei dem erfindungsgemäßen Verfahren wird die Spule einer Phase einer Transversalflussmaschine auf einem externen Spulenkörper gewickelt. Dieser Spulenkörper definiert die Form der Spule.

Fig. 1 c zeigt eine schematische Darstellung einer Spule 3, die in einem Rückschlussjoch 5 und auf einem Spulenträger 4 angeordnet sind. Dieser Spulenträger 4 weist einen Grundkörper 41 auf, an dem acht Vorsprünge 43 angeordnet sind. Diese Vorsprünge 43 sind in Umfangsrichtung des Grundkörpers bzw. der Spule 3 jeweils gleich beabstandet. Die Ebene E des Spulenträgers liegt hier in der Figurenebene und die Längsrichtung der Vorsprünge erstreckt sich senkrecht hierzu. Das Bezugszeichen 7 bezieht sich auf Nuten, die in dem Außenumfang des Rückschlussjoches 5 angeordnet sind. In diesen Nuten können Leitungen zur Stromzuführung an die Transversalmaschine oder auch Kühlrohre geführt werden.

Fig. 1 d zeigt eine Spule 3, die auf einem Spulenträger 4 angeordnet ist. Man erkennt, dass die Spule 3 jeweils auf den Außenoberflächen 43a der bezüglich des Grundkörpers 41 nach außen ragenden Vorsprünge 43 aufliegt. Bevorzugt weisen diese Außenoberflächen 43a eine gekrümmte Oberfläche auf um die Formgebung für die Spule 3 zu unterstützen.

Fig. 1e zeigt eine weitere schematische Darstellung eines erfindungsgemäßen Spulenträgers 4. Dieser Spulenträger weist die Vielzahl von Vorsprüngen 44, 45 auf. Dabei sind die einzelnen Vorsprünge 44, 45 jeweils gleich voneinander in der Umfangsrichtung des Grundkörpers 41 beabstandet. Die einzelnen Vorsprünge 44 weisen seitliche Borde 48, 49 auf, wobei die seitlichen Borde der jeweiligen Vorsprünge 45 in Fig. 1 e nicht erkennbar sind, da diese verdeckt werden. Die Borde 48, 49 ragen radial nach außen. Wie in Fig. 1e ersichtlich, sind die Vorsprünge 44 und 45 mit dem jeweils gegenüberliegenden Borden 48, 49 jeweils abwechselnd zueinander angeordnet. Mit Hilfe dieser jeweils abwechselnd angeordneten Borde 48, 49 können auch mäanderförmige Spulen auf dem Spulenträger 4 aufgewickelt werden.

Fig. 1f zeigt den Spulenträger 4 mit der darauf angeordneten Spule mit den jeweils abwechselnd zueinander vorgesehenen Vorsprüngen 44 und 45 ohne das Rückschlussjoch 5.

Die Fig. 2a und 2b zeigen einen Spulenträger 4 in einer weiteren Ausführungsform. In diesem Falle weist der Spulenträger 4 einen Grundkörper 41 in Form eines Rings auf. In diesem Ring ist ebenfalls eine Vielzahl von Vorsprüngen 43 angeordnet, wobei der Ring hier durch einen Randbereich der einzelnen Vorsprünge 43 verläuft und sich insbesondere nicht entlang der gesamten Breite der einzelnen Vorsprünge erstreckt. Der in Fig. 2a und 2b gezeigte Spulenträger 4 ist aus einem isolierenden und temperaturfesten Material hergestellt. Bei der in Fig. 2b gezeigten Ausführungsform ist der im Folgenden auch als Trägerkäfig bezeichnete Spulenträger 14 zusätzlich derart ausgestaltet, dass er die Form der Wicklung (z.B. einer mäanderförmigen Wicklung) unterstützt.

Der in Fig. 2a und 2b gezeigte Spulenträger ist so ausgeführt, dass er in die freien Räume der Phase der Transversalflussmaschine eingepasst werden kann und somit zwischen den Zähnen der Maschine liegt bzw. läge.

Die Fig. 2c und 2d zeigen jeweils den Spulenträger 14 in zwei unterschiedlichen Ausführungsformen, wobei hier die Spule nicht dargestellt wird, sondern das Rückschlussjoch 15.

Auf diesen Spulenträger wird extern die Spule gewickelt und anschließend beispielsweise mit lsolierpapier isoliert. Anschließend wird die Spule mit den Träger in das (nicht gezeigte) Rückschlussjoch eingebracht (z.B. eingepresst oder eingeschrumpft). Vorteilhaft wird die Spule vor dem Einbringen in das Rückschlussjoch zusammengepresst, ohne dass die Leiter beschädigt werden. Im Anschluss wird die Spule an das Rückschlussjoch angepresst, wobei diese Bewegung durch den elastischen Spulenträger 14 bzw. den elastischen Grundkörper 41 des Spulenträgers 14 zusätzlich an das Rückschlussjoch angepresst wird. Dadurch wird sowohl der Kupferfüllfaktor als auch die thermische Ankopplung und damit die Leistung der Transversalflussmaschine erhöht.

Im Anschluss werden auch hier die Zähne der Phase der Transversalflussmaschine von beiden Seiten angefügt. Dabei ist es auch möglich, dass die Zähne einer Seite bereits eingesteckt sind, dass die Spule 13 in die Zusammenstellung von Rückschlussjoch 15 und Zähne der einen Seite eingebracht wird, so dass im Anschluss die Zähne der zweiten Seite'eingebracht werden. Es wäre auch möglich, den Spulenträger 14 nach dem Einbringen der Spule 13 und gegebenenfalls der Zähne in das Rückschlussjoch 15 wieder zu entfernen.

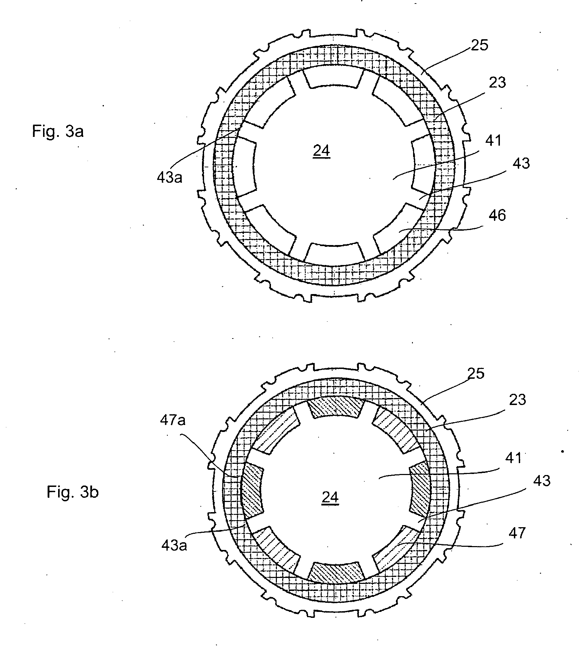

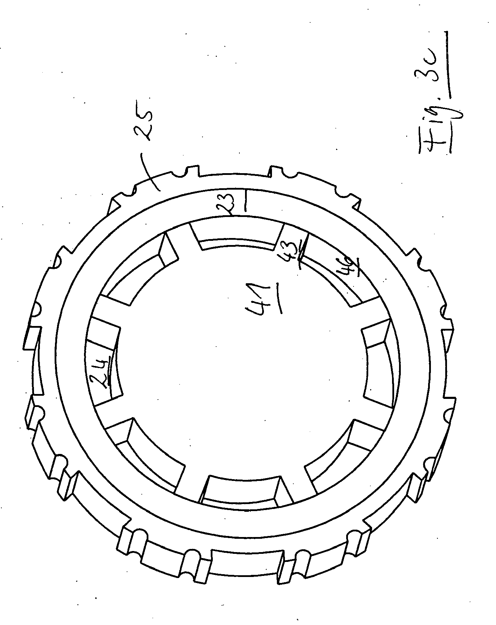

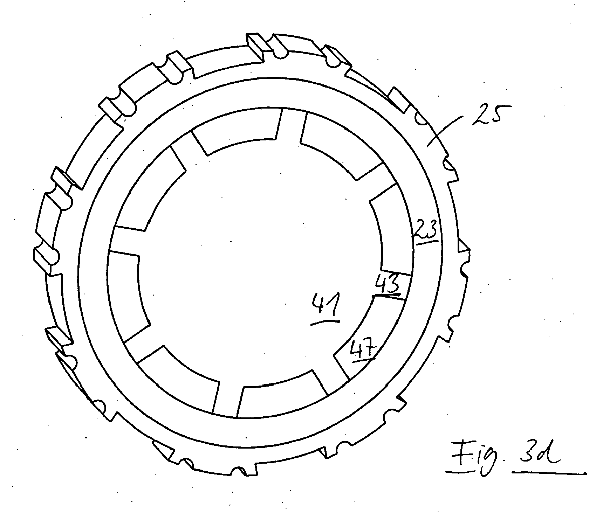

Die Fig. 3a - 3d veranschaulichen ein erfindungsgemäßes Verfahren in einer weiteren Variante. Hier wird ein Spulenträger 24 verwendet, der nur für die Montage der Spule in das Rückschlussjoch 25 genutzt wird. Dieser Spulenträger 24 weist bei der Fig. 3a gezeigten Ausführungsform eine Vielzahl von Vorsprüngen 43 auf, die sich ebenfalls bezüglich eines Grundkörpers 41 radial nach außen erstrecken. Diese Vorsprünge 43 können auch entsprechend den obigen Ausführungsformen (nicht gezeigte) seitliche Borde für das Aufbringen einer mäanderförmigen Spule aufweisen.

Bei der in Fig. 3a gezeigten Ausführungsform sind die Außenoberflächen 43a der einzelnen Vorsprünge jeweils abgerundet. Zwischen den einzelnen Vorsprüngen 43 werden Zwischenräume oder Ausnehmen 46 gebildet. In diese Ausnehmungen 46 können (in Fig. 3d gezeigte) Formstücke 47 eingebracht werden. Bei der in Fig. 3a gezeigten Variante ist der Spulenträger sternförmig mit abgerundeten Zacken des Sterns, sodass der Spulenträger in die freien Aussparungen der Phase der Transversalflussmaschine passt. Die jeweiligen Störkonturen sind dabei durch die Spule und die Zähne gegeben. Werden im Fall von Fig. 3b die Formstücke entnommen, so ist die Form mit der Variante von Fig. 3a identisch. Die Fig. 3c und 3d zeigen jeweils perspektivische Darstellungen zur Veranschaulichung des Spulenträgers bei dieser Variante.

Auf dem Spulenträger 24 wird extern die Spule gewickelt. Bei der in Fig. 3b gezeigten Variante werden nach dem Wickeln der Spule die Formstücke 47 entnommen. Dies ist vorteilhaft, da so die Spule an den Stellen, an denen die Formstücke entnommen worden sind, eine höhere Rundförmigkeit aufweist und die Drahtbelastung beim Wickeln der Spule geringer ist. Anschließend wird auch hier die Spule mit dem Träger in das Rückschlussjoch eingebracht, beispielsweise eingepresst oder eingeschrumpft. Die Formstücke 47 weisen damit ebenfalls, wie in Fig. 3b gezeigt, eine gekrümmte, genauer gesagt kreissegmentförmig gekrümmte Außenoberfläche 47a auf.

Wie bei den obigen Ausführungsformen werden im Anschluss an das Einfügen der Spule Zähne der Phase der Transversalflussmaschine von beiden Seiten angefügt und danach wird der Spulenträger entfernt. Auch hier ist es möglich, dass die Zähne auf einer Seite bereits eingesteckt sind.

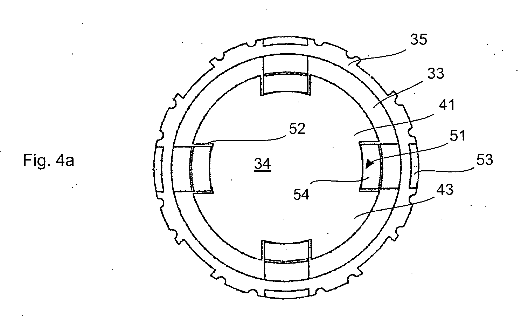

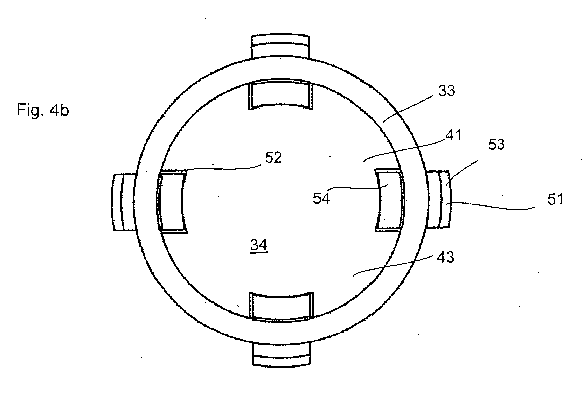

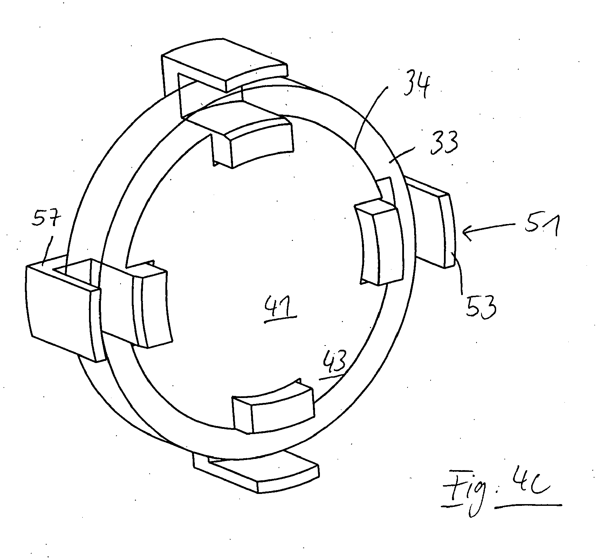

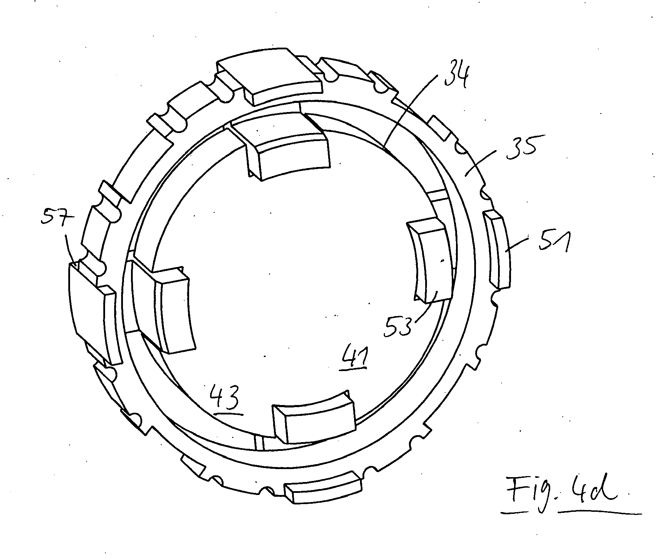

Die Fig. 4a - 4d zeigen eine weitere Ausführungsform eines erfindungsgemäßen Spulenträgers 34. Dieser Spulenträger 34, auf dem die Spule 33 angeordnet ist, weist Aufnehmungen auf, um die einzelnen Zähne 51 der Transversalflussmaschine aufzunehmen und zu fixieren. Genauer gesagt werden bei dieser Ausführungsform alle Zähne einer Seite der Phase der Transversalflussmaschine aufgenommen. Um diesen Spulenträger 34 und in die einzelnen Zähne 51 wird die Spule gewickelt. Anschließend wird das Rückschlussjoch (nicht gezeigt) aufgebracht, beispielsweise aufgepresst. Auch hier wäre es grundsätzlich möglich, die Zähne einer Seite der Phase bereits mit dem Rückschlussjoch und dem Spulenträger zu verbinden und zu bewickeln. In diesem Falle kann jedoch in der Regel nicht der gewünschte hohe Kupferfüllfaktor erreicht werden.

Die einzelnen Zähne 51 weisen einen äußeren Abschnitt 53 und einen inneren Abschnitt 54 auf. Diese sind über einen Verbindungsabschnitt 57 (vgl. Fig. 4c) verbunden. Der innere Abschnitt 54 der Zähne liegt dabei in Ausnehmungen 52 des Spulenträgers 34. Der äußere Abschnitt 53 der Zähne 51 liegt in hierfür angepassten Ausnehmungen des Rückschlussjochs 35.

Im Anschluss wird die Verbindung aus Rückschlussjoch, Spule 33 und einer Seite der Zähne mit den Zähnen der anderen Seite verbunden, wobei der Spulenträger 34 bzw. Montageträger aus der Phase entfernt wird.

Vorteilhaft werden die Zähne der zweiten Seite auf einem anderen Montageträger gehaltert, wobei dieser andere (nicht gezeigte) Montageträger Aussparungen für die komplette Phase der Transversalflussmaschine aufweist. Auf diese Weise kann das Zusammenfügen der einzelnen Zähne folgen, ohne dass eine Verletzung der Spulenleiter riskiert wird. Der weitere Montageträger und der Spulenträger werden schließlich entfernt.

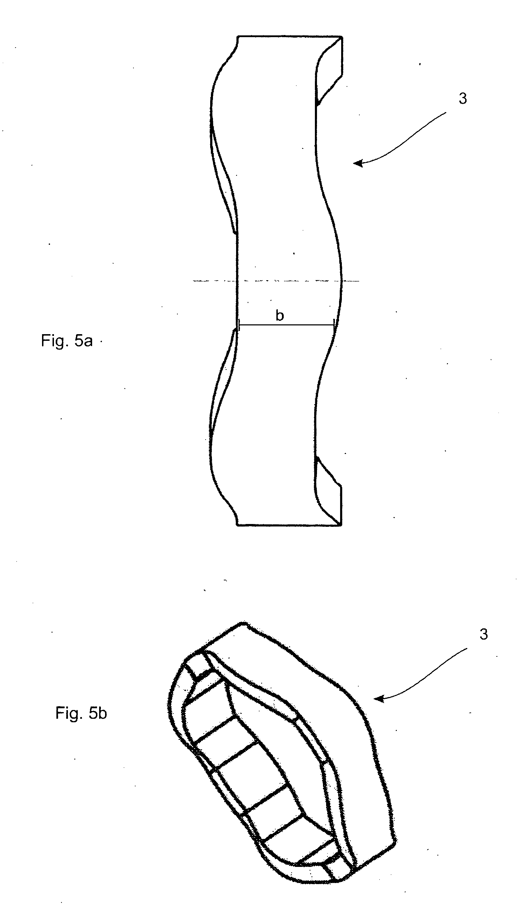

Die Figuren 5a und 5b zeigen eine mäanderförmige Spule in einer Draufsicht (Fig. 5a) und in einer perspektivischen Darstellung (Fig. 5b). Durch diese mäanderförmige Ausbildung können die in der Transversalflussmaschine vorhandenen Räume besser genutzt werden und damit eine höhere Menge an Kupfer eingebracht werden. Genauer können die durch die jeweiligen Zähne begrenzten Räume besser genutzt werden, in dem diese Zähne, wie oben erwähnt, abwechselnd zueinander jeweils umgekehrt eingebracht werden und jeweils einseitig zusätzlich zur Verfügung stehenden Räume von der Spule genutzt werden. Diese mäanderförmige Spule kann bei allen oben gezeigten Ausführungsformen zur Anwendung kommen. Die Breite b der Spule ist im Wesentlichen (abgesehen von geringen Breitenänderungen im Bereich der Krümmungen) konstant.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 3, 13, 23, 33: Spule
- 4, 14, 24, 34: Spulenträger
- 5, 15, 25, 35: Rückschlussjoch
- 7: Nut
- 41: Grundkörper des Spulenträgers
- 43, 44, 45: Vorsprünge
- 43a, 44a: Außenoberfläche der Vorsprünge
- 46: Ausnehmungen
- 47: Formstücke
- 47a: Außenoberfläche der Formstücke
- 48, 49: seitliche Borde der Vorsprünge
- 51: Zähne
- 52: Ausnehmung des Spulenträgers
- 53: äußerer Abschnitt der Zähne
- 54: innerer Abschnitt der Zähne
- 57: Verbindungsabschnitt
- E: Ebene des Grundkörpers
- b: Breite der Spule

## Patentansprüche

1. Verfahren zur Herstellung einer Transversalflussmaschine mit den Schritten:
- Wickeln wenigstens einer Spule (3, 13, 23, 33) auf einen Spulenträger (4, 14, 24, 34);
- Isolieren der Spule (3, 13, 23, 33);
- Einbringen der Spule (3, 13, 23, 33) in ein Rückschlussjoch (5, 15, 25, 35);
**dadurch gekennzeichnet, dass**
das Rückschlussjoch (5, 15, 25, 35) und der Spulenträger (4, 14, 24, 34) getrennte Bauteile sind und die Spule (3, 13, 23, 33) nach dem Wickeln auf den Spulenträger (4, 14, 24, 34) ihre endgültige Form erhält.

2. Verfahren nach Anspruch 1,
**dadurch gekennzeichnet, dass**
zur Herstellung der Spule (3, 13, 23, 33) ein Spulendraht mit im Wesentlichen rechteckigen Querschnitt verwendet wird.

3. Verfahren nach wenigstens einem der vorangegangenen Ansprüche,
**dadurch gekennzeichnet, dass**
die Spule (3, 13, 23, 33) mäanderförmig auf den Spulenträger (4, 14, 24, 34) gewickelt wird.

4. Verfahren nach wenigstens einem der vorangegangenen Ansprüche,
**dadurch gekennzeichnet, dass**
die Spule (3, 13, 23, 33) nach dem Wickeln verpresst wird.

5. Verfahren nach wenigstens einem der vorangegangenen Ansprüche,
**dadurch gekennzeichnet, dass**
die Spule (3, 13, 23, 33) nach dem Wickeln verharzt wird.

6. Verfahren nach wenigstens einem der vorangegangenen Ansprüche,
**dadurch gekennzeichnet, dass**
die Spule (3, 13, 23, 33) nach dem Einbringen in das Rückschlussjoch (5, 15, 25, 35) mit diesem vergossen wird.

7. Verfahren nach wenigstens einem der vorangegangenen Ansprüche,
**dadurch gekennzeichnet, dass**
der Spulenträger (4, 14, 24, 34) nach dem Wickeln der Spule (3, 13, 23, 33) entfernt wird.

8. Verfahren nach wenigstens einem der vorangegangenen Ansprüche 1 - 5,
**dadurch gekennzeichnet, dass**
der Spulenträger (4, 14, 24, 34) in der Transversalflussmaschine verbleibt.

9. Verfahren nach wenigstens einem der vorangegangenen Ansprüche,
**dadurch gekennzeichnet, dass**
die Spule (3, 13, 23, 33) in das Rückschlussjoch (5, 15, 25, 35) eingepresst wird.

10. Verfahren nach wenigstens einem der vorangegangenen Ansprüche,
**dadurch gekennzeichnet, dass**
nach dem Einbringen der Spule (3, 13, 23, 33) in das Rückschlussjoch (5, 15, 25, 35) Zähne der Phase an der Spule (3, 13, 23, 33) angebracht werden.

11. Verfahren nach wenigstens einem der vorangegangenen Ansprüche,
**dadurch gekennzeichnet, dass**
die Spule (3, 13, 23, 33) extern gewickelt wird.

12. Verfahren nach wenigstens einem der vorangegangenen Ansprüche,
**dadurch gekennzeichnet, dass**
ein Spulenträger (4, 14, 24, 34) aus einem temperaturfesten Material verwendet wird.

13. Spulenträger (4, 14, 24,34) zur Herstellung einer Spule (3, 13, 23, 33) für eine Transversalflussmaschine mit einem Grundkörper (41) mit kreisförmigem Querschnitt und einer Vielzahl von fest an dem Grundkörper (41) angeordneten Vorsprüngen (43, 44, 45),
**dadurch gekennzeichnet, dass**
die einzelnen Vorsprünge (43, 44, 45) jeweils gleich zueinander beabstandet sind und bezüglich des Grundkörpers (41) wenigstens teilweise radial nach außen ragen.

14. Spulenträger nach.Anspruch 13,
**dadurch gekennzeichnet, dass**
sich die einzelnen Vorsprünge (43, 44, 45) in einer senkrecht zu der Ebene (E) des Grundkörpers (41) stehenden Richtung wenigstens entlang der vollständigen Länge des Grundkörpers (41) erstrecken.

15. Spulenträger nach wenigstens einem der vorangegangenen Ansprüche 13 - 14,
**dadurch gekennzeichnet, dass**
der Grundkörper (41) als Ring ausgebildet ist.

16. Spulenträger nach wenigstens einem der vorangegangenen Ansprüche 13 - 15,
**dadurch gekennzeichnet, dass**
die Vorsprünge (43, 44, 45) an ihren radial außenliegenden Flächen gekrümmt sind.

17. Spulenträger nach wenigstens einem der vorangegangenen Ansprüche 13 - 16,
**dadurch gekennzeichnet, dass**
zwischen den Vorsprüngen entnehmbare Formstücke (47) vorgesehen sind.

18. Spulenträger nach wenigstens einem der vorangegangenen Ansprüche 13 - 17,
**dadurch gekennzeichnet, dass**
die Vorsprünge seitliche Borde (48, 49) aufweisen.

19. Spulenträger nach Anspruch 18,
**dadurch gekennzeichnet , dass**
die seitlichen Borde (48, 49) der einzelnen Vorsprünge (47) in der Umfangsrichtung des Spulenträgers (4, 14, 24, 34) abwechselnd an gegenüberliegenden Enden der Vorsprünge (44, 45) angeordnet sind.

20. Spulenträger nach wenigstens einem der vorangegangenen Ansprüche 13 - 15,
**dadurch gekennzeichnet, dass**
der Spulenträger (4, 14, 24, 34) eine Vielzahl von Ausnehmungen (46) zur wenigstens teilweisen Aufnahme von Zähnen einer Transversalflussmaschine aufweist.
